# EUROPEAN PATENT SPECIFICATION

(11) **EP 0 409 105 B1**
(45) Date of publication and mention of the grant of the patent: **05.11.1997**
(21) Application number: 90113469.2
(22) Date of filing: 13.07.1990
(51) Int. Cl.: C08G 75/02

(54) **Process for preparing polyarylene sulfides**
Verfahren zur Herstellung von Polyarylensulfiden
Procédé de préparation de sulfures de polyarylènes

(30) Priority: 17.07.1989 JP 184375/89
(43) Date of publication of application: 23.01.1991
(73) Proprietor: IDEMITSU PETROCHEMICAL CO. LTD., Tokyo 100 (JP)
(72) Inventor: Senga, Minoru, Ichihara-shi, Chiba-ken (JP); Miyoshi, Akira, Ichihara-shi, Chiba-ken (JP)
(74) Representative: TER MEER STEINMEISTER & PARTNER GbR

(56) References cited:
- EP-A- 0 257 228
- EP-A- 0 288 308
- DE-A- 2 026 655
- US-A- 4 405 767

## Description

The present invention relates to a process for preparing granular polyarylene sulfides (hereinafter referred to as PAS) and, more particularly, to a process for preparing granular PAS with high efficiency, which can be handled easier than powdery PAS.

### Description of Related Art

Polyarylene sulfides (PAS) such as polyphenylene sulfide (hereinafter referred to as PPS) having a recurring unit as represented by formula: 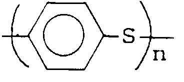 are mostly thermoplastic resins having partially thermosetting characteristic, and they have excellent properties as engineering plastics, such as resistance to chemicals, mechanical properties over a wide range of temperatures, and resistance to thermal rigidity.

It is known that the PAS is generally prepared by polycondensation of a dihalogenated aromatic compound with a source of sulfur (a sulfur compound) in an organic polar solvent. As a general technology for preparing PAS having a high molecular weight, there has been used a process for adding an additive capable of separating a phase (hereinafter referred to as a phase separator) to a reaction system which contains a reaction mixture containing the PAS obtained by polycondensation. This process can produce both granular PAS and powdery PAS.

It is to be noted, however, that powdery PAS causes bubbles, coloration or decomposed gases, when contaminated into products, and it causes an interlocking failure or dust when molded into products, so that it is extremely laborious in handling.

In post-processing after reaction, the conventional process has problems that a long period is required for filtration after washing or that the line may often be closed during drying.

Japanese Patent Examined Publication No. 33,775/1988 discloses technology for preparing PAS in the form of granule or pearl by changing the amount of water and the polymerization temperature to a remarkably great extent between the early stage and the later stage of polymerization. Further, Japanese Patent Examined Publication No. 25,493/1989 discloses technology for preparing granular PAS by adding to the reaction system water as a phase separator after polymerization. The former, however, has the drawbacks that it is not economical due to a low yield. The latter suffers from the disadvantages that, although this technology provides a good yield of the granular PAS, the resulting product may contain low molecular weight components such as oligomers so that it may reduce the quality of the resulting products.

Therefore, the present invention has been completed in order to improve the circumstances as described hereinabove and has the object to provide a process for preparing a polyarylene sulfide (PAS) in the form of granules (including beads and pearls), which is high in quality and easy in handling, with high yield and in economical manner.

In order to achieve the object, the present invention consists of a process for preparing a granular polyarylene sulfide by polycondensation of a dihalogenated aromatic compound with a source of sulfur in an organic polar solvent, wherein: the polycondensation is performed in the presence of a powdery polyarylene sulfide having the same composition as the (final) granular one and having a particle size of 0.2 mm or smaller, wherein the powdery polyarylene sulfide is added in an amount ranging from 1 % to 50 % by weight with respect to the weight of the dihalogenated aromatic compound used.

The present invention will be described more in detail.

### Organic Polar Solvents

As the organic polar solvent to be used may be used a non-protonic organic solvent such as an amide compound, a lactam compound, a urea compound, an organic sulfur compound and a cyclic organophosphorus compound.

The amide compound may include, for example, N,N'-dimethylformamide, N,N-dimethylacetamide, N,N-diethylacetamide, N,N-dipropylacetamide or N,N-dimethylbenzoic amide.

The lactam compound may include, for example, caprolactam, N-methylcaprolactam, N-ethylcaprolactam, N-n-propylcaplactam, N-isopropylcaprolactam, N-n-butylcaprolactam, N-isobutylcaprolactam, N-cyclohexylcaprolactam, N-methyl-2-pyrrolidone, N-ethyl-2-pyrrolidone, N-n-propyl-2-pyrrolidone, N-isopropyl-2-pyrrolidone, N-n-butyl-2-pyrrolidone, N-isobutyl-2-pyrrolidone, N-cyclohexyl-2-pyrrolidone, N-methyl-3-methyl-2-pyrrolidone, N-ethyl-3-methyl-2-pyrrolidone, N-methyl-3,4,5-tri-methyl-2-pyrrolidone, N-methyl-2-piperidone, N-ethyl-2-piperidone, N-propyl-2-piperidone, N-isopropyl-2-piperidone, N-methyl-6-methyl-2-piperidone or N-methyl-3-ethyl-2-piperidone.

As the urea compound may be used, for example, tetramethyl urea, N,N'-dimethylethyleneurea or N,N'-dimethylpropylene urea.

The cyclic organophosphorus compound may include, for example, 1-metyl-1-oxophosphorane, 1-n-propyl-1-oxophosphorane or 1-phenyl-1-oxophosphorane.

Among the organic polar solvents, an N-alkyllactam and an N-alkylpyrrolidone are preferred. More preferred is N-methyl-2-pyrrolidone. The solvent may be used singly or in combination of two or more.

### Source of Sulfur

The sulfur source to be used may include an alkali metal sulfide, an alkali metal hydrosulfide and hydrogen sulfide.

The alkali metal sulfide may include, for example, lithium sulfide, sodium sulfide, potassium sulfide, rubidium sulfide and cesium sulfide. Sodium sulfide and lithium sulfide are preferred, and sodium sulfide is more preferred. The alkali metal sulfide may be used singly or in combination of two or more.

It is further noted that the alkali metal sulfide may be one obtainable by reaction of an alkali metal hydrosulfide with a base. The alkali metal hydrosulfide may be used together with the base, in place of or in addition to the alkali metal sulfide.

Furthermore, it is to be noted that hydrogen sulfide can be used as the source of sulfur together with the base or hydrogen sulfide can be used together with the base in addition to the alkali metal sulfide and/or the alkali metal hydrosulfide. The alkali metal hydrosulfide may include, for example, lithium hydrosulfide, sodium hydrosulfide, potassium hydrosulfide, rubidium hydrosulfide and cesium hydrosulfide. Sodium hydrosulfide and lithium hydrosulfide are preferred, and sodium hydrosulfide is more preferred. These alkali metal hydrosulfides may be used singly or in combination of two or more.

The base may be any acid receptor of an inorganic type or of an organic type, which can convert the alkali metal hydrosulfide into the alkali metal sulfide or hydrogen sulfide into the alkali metal sulfide, or effectively neutralize or receive a hydrogen halide producible upon polycondensation of the alkali metal hydrosulfide or hydrogen sulfide with the dihalogenated aromatic compound and which does not adversely affect the object of the present invention. As the base, an alkali metal hydroxide may be used appropriately.

The alkali metal hydroxide may include, for example, lithium hydroxide, sodium hydroxide, potassium hydroxide, rubidium hydroxide, and cesium hydroxide. Lithium hydroxide and sodium hydroxide are preferred, and sodium hydroxide is more preferred. The base of the organic type may include, for example, a metal salt of an ω-hydroxycarboxylic acid and an alkali metal aminoalkanoate. The base may be used singly or in combination of two or more. The base may be used usually in an amount ranging from about 0.80 to 1.2 moles with respect of mole of the total hydrogen atom of the alkali metal hydrosulfide and hydrogen sulfide.

As the alkali metal sulfide and the alkali metal hydrosulfide, there may be used ones of industrial grade containing hydrated water in the amount of 2.6 moles to 9 moles per mole of them. If the industrial grade one containing smaller than 1.2 moles of hydrated water with respect to mole of the alkali metal sulfide or the alkali metal hydrosulfide is used, an appropriate amount of water may be added to the reaction system.

The organic polar solvent may be used at a rate ranging usually from 1 mole to 20 moles, preferably from 2 moles to 10 moles, with respect to mole of the sulfur atom of the sulfur source. If the rate of the organic polar solvent would be less than the lower limit, on the one hand, the reaction may not proceed to a sufficient extent. If the rate of the organic polar solvent would exceed the upper limit, on the other hand, volume efficiency may be worsened, thereby reducing productivity.

### Phase Separator

The phase separator to be used for the present invention has the activity for separating the resulting PAS as a solid component from a homogeneous reaction mixture and may include, for example, water, a lithium halide and an alikali metal acetate. The phase separator may be used singly or in combination with two or more. The lithium halide may specifically include lithium chloride and lithium fluoride, and the alkali metal acetate may specifically include lithium acetate or sodium acetate. Lithium chloride is particularly preferred.

Water is also preferred as the phase separator. Water may be added to the polymerization system as it is or in the form of a hydrate of the above-specified alkali metal sulfide or alkali metal hydrosulfide.

The phase separator may be added to the system prior to, during or in the last stage of polycondensation. The phase separator may be used at the rate ranging usually from 0.05 to 2.0 moles, preferably from 0.1 to 1.2 moles, with respect to mole of the sulfur atom of the sulfur source. If the rate of the phase separator used is less than the lower limit, on the one hand, the effect of adding the phase separator cannot be achieved to such an extent as expected so that the reaction velocity may become too slow and the resulting PAS may not provide a sufficiently high molecular weight and purity. If the rate of the phase separator added is greater than the upper limit, on the other hand, the effect as expected cannot be gained so as to compensate for such a large amount of the phase separator and the cost of production may become too expensive to be economical.

### Dihalogenated aromatic Compounds

The dihalogenated aromatic compound to be used for the present invention may be any compound which is known to the art as useful for preparing the PAS. And it may include, for example, a dihalobenzene such as m-dihalobenzene and p-di-halobenzene; an alkyl-substituted dihalobenzene such as 2,3-di-halotoluene, 2,5-dihalotoluene, 2,6-dihalotoluene, 3,4-dihalotoluene, 2,5-dihaloxylene, 1-ethyl-2,5-dihalobenzene, 1,2,4,5-tetramethyl-3,6-dihalobenzene and 1-n-hexyl-2,5-dihalobenzene; a cycloalkyl-substituted dihalobenzene such as 1-cyclohexyl-2,5-dihalobenzene; an aryl-substituted dihalobenzene such as 1-phenyl-2,5-dihalobenzene, 1-benzyl-2,5-dihalobenzene and 1-p-toluyl-2,5-dihalobenzene; a dihalobiphenyl such as 4,4'-dihalobiphenyl; and a dihalonaphthalene such as 1,4-dihalonaphthalene, 1,6-dihalonaphthalene, and 2,6-dihalonaphthalene.

The two halogen atoms in the dihalogenated aromatic compounds may be fluorine, chlorine, bromine or iodine and they may be the same or different from each other.

Of those dihalogenated aromatic compounds as described hereinabove, the dihalobenzenes are preferred, and p-dichloro-benzene and one containing 70% by mole of p-dichlorobenzene or more is particularly preferred.

The dihalogenated aromatic compound may be used at the rate ranging usually from 0.95 to 1.20 moles, preferably from 0.98 to 1.10 moles, with respect to mole of the sulfur atom in the sulfur source. If the rate of the dihalogenated aromatic compound would be smaller than the lower limit, by-products such as thiophenol may be produced. If the rate of the dihalogenated aromatic compound would exceed the upper limit, the molecular weight of the resulting polyarylene sulfide may be reduced.

### Additives

If needed, together with the dihalogenated aromatic compound, there may be used an additive, including a branching agent such as an active-hydrogen containing halogenated aromatic compound, a poly-halogen aromatic compound containing three halogen atoms or more in one molecule and a halogenated aromatic nitro compound, and a molecular weight modifier such as a mono-halogen aromatic compound.

As the active-hydrogen containing halogenated aromatic compound is employed a halogenated aromatic compound with a functional group or groups having active hydrogen atom, such as an amino group, mercapto group or hydroxyl group. More specifically, the active-hydrogen containing halogenated aromatic compound may include, for example, a dihaloaniline such as 2,6-dichloroaniline, 2,5-dichloroaniline, 2,4-dichloroaniline and 2,3-dichloroaniline, a trihaloaniline such as 2,3,4-trichloroaniline, 2,3,5-trichloroaniline, 2,4,6-trichloroaniline and 3,4,5-trichloroaniline, a dihaloaminodiphenyl ether such as 2,2'-diamino-4,4'-dichlorodiphenyl ether and 2,4'-diamino-2',4-dichlorodiphenyl ether and those in which the amino group is replaced by the other functional group such as thiol group or hydroxyl group.

There may also be used an active-hydrogen containing halogenated aromatic compound in which hydrogen atom or atoms joined to the carbon atom or atoms forming its aromatic ring is or are replaced by another inert group or groups such as a carbohydryl group, i.e., an alkyl group.

Among the active-hydrogen containing halogenated aromatic compounds, the active-hydrogen containing dihalogenated aromatic compound is preferred. Dichloroaniline is more preferred.

As the polyhalogen aromatic compound having three halogen atoms or more in one molecule, there may specifically be used 1,2,4-trichlorobenzene, 1,3,5-trichlorobenzene, and 1,4,6-trichloronaphthalene.

The halogenated aromatic nitro compound may include, for example, a mono- or di-halonitrobenzene such as 2,4-dinitro-chlorobenzene or 2,5-dichloronitrobenzene, a dihalonitrodiphenylether such as 2-nitro-4,4-dichlorodiphenyl ether, a dihalonitrodiphenyl sulfone such as 3,3'-dinitro-4,4'-dichlorodiphenylsulfone, a mono- or di-halonitropyridine such as 2,5-dichloro-3-nitropyridine or 2-chloro-3,5-dinitropyridine, or a dihalonitronaphthalene.

The mono-halogen aromatic compound may include, for example, chlorobenzene, bromobenzene, α-chlorobenzene, α-chlorotoluene, o-chlorotoluene, m-chlorotoluene, p-chlorotoluene, α-bromotoluene, o-bromotoluene, m-bromotoluene or p-bromotoluene.

By using these active-hydrogen containing halogenated aromatic compound, the polyhalogen aromatic compound or the halogenated aromatic nitro compound, the resulting polymers increase their degree of branching or molecular weight, thereby further improving their various properties.

In accordance with the process according to the present invention, the branching agent or molecular weight modifier may be used singly or in combination of two or more.

### Powdery PAS

For the present invention, it is of significance to add the PAS in the form of powder to the polycondensation system and thereafter to perform polycondensation.

As the powdery PAS, there may be used any one which may be prepared by conventional polycondensation. However, from the object of the present invention, it is particularly preferred to use the powdery PAS of the PAS which may be obtained via post-processing in the process according to the present invention.

For the powdery PAS to be added to the polycondensation step of the present invention, there is used a powdery PAS having a particle size of 0.2 mm or smaller. It is also used that the resulting PAS may be sieved through a filter having 0.707 to 0.074 mm (24 to 200 mesh).

Further, there is no limit upon the molecular weight of the powdery PAS to be used for the process according to the present invention. It is to be noted that there may be used the powdery PAS having a wide range of molecular weights from oligomers having low molecular weights to polymers having high molecular weights. However, as a general rule, the powdery PAS to be used for this purpose may include an oligomer having a relatively low molecular weight. However, the powdery PAS containing impurities may be employed, although the powdery PAS purified to a higher degree of purity may preferably be used.

The powdery PAS is added to the reaction system in the amount ranging generally from 1 to 50% by weight, preferably from 2 to 20% by weight, with respect to the dihalogented aromatic compound. It can also be noted that there is no limit placed upon the shape of the powdery PAS and it is general and particularly preferred to use the powdery PAS which can be recovered from the recovering step as described hereinabove.

### Polycondensation

The process according to the present invention is carried out by adding the powdery PAS to the polycondensation system in which the dihalogenated aromatic compound is polycondensed with the source of sulfur in the organic polar solvent and preferably in the presence of the phase separator.

The order of blending the ingredients is not restricted to a particular one. In usual cases, polycondensation may preferably be performed by blending the sulfur source such as sodium sulfide of industrial grade with a portion of the organic polar solvent and the phase separator, heating the mixture, distilling a portion of the mixture of water with the organic polar solvent, and adding the remaining amount of the organic polar solvent, the powdery PAS and the dihalogenated aromatic compound. The pressure of polycondensation may usually range from 1.98 to 9.8 bar (2 to 10 kg/cm²).

The process according to the present invention may be carried out such that dehydration is performed prior to polycondensation so as to allow the water content to reach 1.2 moles or smaller with respect to mole of the sulfur source.

The reaction temperature may range usually from 220 °C to 300°C, preferably from 230 °C to 290 °C. If the reaction temperature would be below the lower limit, on the one hand, the reaction velocity may become too slow to be practically applicable. If the reaction temperature would be over the upper limit, on the other hand, side reaction may occur and the resulting polymer may deteriorate, thereby resulting in coloration or gellation.

The reaction time may vary with the kind and amount of the various components and the phase separator, and it may generally be 20 hours or longer, preferably from 0.1 to 8 hours.

The polycondensation may be carried out in an ambient atmosphere of an inert gas such as nitrogen, argon or carbon dioxide.

The polycondensation may be a one-stage reaction in which the reaction is carried out at a stationary temperature or a multiple-stage reaction in which the reaction temperature is elevated in a stepwise manner or in a continuously ascending manner.

### PAS

After polycondensation, which is performed under elevated pressure, the pressure-resistant reactor is opened and it is usually found therein that the reaction mixture in a slurry form, containing the granular PAS and the powdery PAS, is obtained in such a manner that the granular PAS is far larger in yield than the powdery PAS. More specifically, the powdery PAS may be produced in a yield of 5-15% by weight of the granular PAS. As the powdery PAS is smaller in molecular weight, the resulting products may have lowered properties if the powdery PAS contaminated them. Therefore, such powdery PAS should be prevented from contaminating the resulting product.

The granular PAS may be isolated by separating it directly from a reactor by a standard method such as filtration or centrifugal separation or by separating it from the reaction mixture after addition of water and/or a flocculating agent such as a dilute acid.

The polymer separated is then washed usually with water, N-methylpyrrolidone (NMP), methanol, acetone, benzene or toluene, to remove the alkali metal halide, alkali metal sulfide, phase separator and by-products which adhere to the polymer. The resulting polymer may be recovered by removing the solvent from the reaction mixture without separation therefrom and by washing the residue in the same manner as above. The solvent recovered may be re-used.

If required, the granular PAS resulting from the process according to the present invention can be subjected to a variety of desalting treatment, thereby reducing the salt content, such as sodium chloride, in the polymer to a lesser extent.

It is preferred that the PAS in the granular form is recovered while the PAS in the powdery form is fed back and reused to the polycondensation step. This operation enables the powdery PAS to be handled within the system, which is laborious in handling, thereby yielding a substantially 100% yield of the granular PAS and achieving high workability and good economy.

As described hereinabove, the present invention readily and stably provides the PAS in the form of granules, pearl or beads having a sufficiently high molecular weight.

The granular PAS resulting from the process according to the present invention does not contain any low molecular components such as oligomers, unlike the powdery PAS. The granular PAS is high in quality, easy in handling and unlikely to cause poorness in interlocking during molding and problems of dust. Further, the process according to the present invention does not require a long period of time for post-processing after polycondensation and for filtration after washing, and it is unlikely to cause troubles such as clotting of the reaction line.

The granular PAS prepared by the process according to the present invention may be formed into various products by formulating them with an appropriate amount of other polymers, fillers such as pigment, graphite, metallic powder, glass powder, quartz powder, glass fibers, carbon fibers, whiskers, a stabilizer or a lubricant. The PAS in the granular form resulting from the process according to the present invention can appropriately be used for various molding materials and materials for films, fibers, mechanical parts or electrical parts.

The present invention will be described more in detail by way of examples with reference to comparative examples. It is to be understood, however, that the present invention is not considered in any respect to be limitative to the examples.

### Example 1

A 10-liter autoclave was charged with 913.0 grams (5.43 moles) of sodium sulfide pentahydrate, 230.1 grams (5.43 moles) of lithium chloride, and 2,970 ml of N-methyl-2-pyrrolidone (NMP). The autoclave was heated to 202°C under nitrogen gas stream to distill off 1,450 ml of a mixture of water with N-methyl-2-pyrrolidone. Then the residue in the autoclave was cooled to about 100 °C. To this residue, a solution of 793 grams (5.40 moles) of p-dichlorobenzene, equimolar equivalent of the remaining sodium sulfide, in 1,030 ml of N-methyl-2-pyrrolidone was added, and the autoclave was closed followed by heating to 260 °C and polycondensing for 3 hours. After completion of the reaction, the autoclave was cooled to room temperature and then opened, thereby yielding the reaction mixture in a slurry form. The slurry was then mixed with 5,000 ml of purified water and stirred for about 30 minutes. Then the mixture was filtered through a 0.707 mm (24 mesh) sieve to thereby separate granular PPS from a slurry containing powdery PPS. Thereafter, the slurry with the powdery PPS was centrifuged to separate solid components which in turn were washed several times with water and acetone and then dried in vacuum at 100°C for 20 hours. The yield of the powdery PPS was 58.4 grams, and the logarithmic viscosity number [η inh] was 0.18. Further, the granular PPS was yielded in the amount of 484.1 grams.

Then, a 1-liter autoclave was charged with 91.3 grams (0.543 mole) of sodium sulfide pentahydrate, 23.01 grams (0.543 mole) of lithium chloride, and 297 ml of N-methyl-2-pyrrolidone. The autoclave was heated to 150 °C under nitrogen gas stream to distill off 145 ml of a mixture of water with N-methyl-2-pyrrolidone. Then the residue in the autoclave was cooled to about 100 °C. To this residue, a solution or a dispersion of 79.07grams (0.538 mole) of p-dichlorobenzene, equimolar equivalent of the remaining sodium sulfide, and 3.95 grams of the above powdery PPS (5% by weight of p-dichlorobenzene) in 103 ml of N-methyl-2-pyrrolidone was added, and the autoclave was closed followed by heating to 260 °C and polycondensing for 3 hours. After completion of the reaction, the autoclave was cooled to room temperature and then opened, thereby yielding the reaction mixture in a slurry form. The slurry was then mixed with 500 ml of purified water and stirred for about 30 minutes. Then the mixture was filtered through a 0.25 mm (60 mesh) sieve to thereby separate granular PPS from a slurry containing powdery PPS. Thereafter, the PPS was then washed several times with water and acetone and then dried in vacuum at 100 °C for 20 hours. The yield of the powdery PPS was 2.84 grams, and the logarithmic viscosity number [η inh] was 0.08. Further, the granular PPS was yielded in the amount of 54.56grams with the logarithmic viscosity number [η inh] of 0.283. The percentage yield was 94% based on p-dichlorobenzene and 88% based on p-dichlorobenzene and the powdery PPS.

### Example 2

The polycondensation and post-treatment were carried out in substantially the same manner as in Example 1, except for changing the amount of the powdery PPS dispersed in N-methyl-2-pyrrolidone to 7.9 grams (10% by weight with respect to p-dichlorobenzene).

The granular PPS was yielded in the amount of 57.21 grams with the logarithmic viscosity number [η inh] of 0.28. The percentage yield was 98% based on p-dichlorobenzene and 87% based on p-dichlorobenzene and the powdery PPS.

The yield of the powdery PPS was 5.76 grams with the logarithmic viscosity number [η inh] of 0.07.

### Example 3

The polycondensation and post-treatment were carried out in substantially the same manner as in Example 1, except for using 63.35 grams of an aqueous solution of sodium hydrosulfide (48% by weight concentration; 0.543 mole) and 75.48 grams (0.543 mole) of sodium N-methylaminobutyrate.

The granular PPS was yielded in the amount of 55.64 grams with the logarithmic viscosity number [η inh] of 0.295. The percentage yield was 96% based on p-dichlorobenzene and 90% based on p-dichlorobenzene and the powdery PPS.

The yield of the powdery PPS was 3.25 grams with the logarithmic viscosity number [η inh] of 0.09.

The process according to the present invention involves polycondensing the dihalogenated aromatic compound with the sulfur source in the organic solvent and yielding the granular PAS by adding the phase separator to the reaction system containing the powdery PAS, thereby avoiding formation of the powdery PAS containing oligomers, which is less useful. The process further is advantageous because the granular PAS which can easily be handled can economically be produced with high yield and ease of handling.

Further, it is to be noted that the powdery PAS containing oligomers are separated from the granular PAS so that the granular PAS contains very low amounts of impurities and low molecular components such as oligomers, thereby yielding the granular PAS of high quality. Also the powdery PAS recovered from the reaction system can also be reused for additional polycondensation so that the process according to the present invention is very economical. Furthermore, the low molecular PAS can be converted into high molecular PAS so that the granular PAS with higher molecular weight and of higher quality can be yielded with high yield.

## Claims

1. A process for preparing a granular polyarylene sulfide by polycondensation of a dihalogenated aromatic compound with a source of sulfur in an organic polar solvent, wherein:
the polycondensation is performed in the presence of a powdery polyarylene sulfide having the same composition as the (final) granular one and having a particle size of 0.2 mm or smaller, wherein the powdery polyarylene sulfide is added in an amount ranging from 1 % to 50 % by weight with respect to the weight of the dihalogenated aromatic compound used.

2. The process as claimed in claim 1, wherein the powdery polyarylene sulifde is a powder which passes through a sieve with 0.707 to 0.074 mm (24 to 200 mesh).

3. The process as claimed in claim 1, wherein the polycondensation is performed in the presence of a phase separator.

4. The process as claimed in claim 3, wherein the phase separator is water, a lithium halide or an alkali metal acetate.

5. The process as claimed in claim 4, wherein the phase separator other than water is used at a rate ranging from 0.05 mole to 2.0 moles with respect to mole of sulfur atom in the source of sulfur.

6. The process as claimed in claim 3, wherein the phase separator is added to the reaction system prior to polycondensation.

7. The method as claimed in any of claims 1 to 6, wherein the powdery polyarylene sulfide is obtained by post-processing the reaction product of said polycondensation.

## Patentansprüche

1. Verfahren zur Herstellung eines körnigen Polyarylensulfids durch Polykondensation einer dihalogenierten, aromatischen Verbindung mit einer Schwefelquelle in einem organischen, polaren Lösungsmittel, wobei
die Polykondensation in Gegenwart eines pulverförmigen Polyarylensulfids, das die gleiche Zusammensetzung wie das (endgültige) körnige sowie eine Teilchengröße von 0,2 mm oder weniger aufweist, durchgeführt wird, wobei das pulverförmige Polyarylensulfid in einer Menge im Bereich von 1 bis 50 Gew.-% zugesetzt wird, bezogen auf das Gewicht der verwendeten, dihalogenierten, aromatischen Verbindung.

2. Verfahren nach Anspruch 1, wobei das pulverförmige Polyarylensulfid ein Pulver ist, welches durch ein Sieb mit 0,707 bis 0,074 mm (24-200 mesh) hindurchgeht.

3. Verfahren nach Anspruch 1, wobei die Polykondensation in Gegenwart eines Phasenseparators durchgeführt wird.

4. Verfahren nach Anspruch 3, wobei der Phasenseparator Wasser, ein Lithiumhalogenid oder ein Alkalimetallacetat ist.

5. Verfahren nach Anspruch 4, wobei der von Wasser verschiedene Phasenseparator in einem Anteil im Bereich von 0,05 Mol bis 2,0 Mol mit Bezug auf Mol Schwefelatom in der Schwefelquelle verwendet wird.

6. Verfahren nach Anspruch 3, wobei der Phasenseparator zu dem Reaktionssystem vor der Polykondensation zugegeben wird.

7. Verfahren nach mindestens einem derAnsprüche 1 bis 6, wobei das pulverförmige Polyarylensulfid durch Nachbearbeitung des Reaktionsprodukts der Polykondensation erhalten wird.

## Revendications

1. Procédé pour la préparation d'un poly(sulfure d'arylène) granulaire par polycondensation d'un composé aromatique dihalogéné en présence d'une source de soufre dans un solvant organique polaire, dans lequel :
- la polycondensation est réalisée en présence d'un poly(sulfure d'arylène) en poudre présentant la même composition que le poly(sulfure d'arylène) granulaire (final) et présentant une taille particulaire de 0,2 mm ou inférieure, dans lequel le poly(sulfure d'arylène) en poudre est ajouté à raison de 1 à 50% en poids par rapport au poids du composé aromatique dihalogéné utilisé.

2. Procédé selon la revendication 1, dans lequel le poly(sulfure d'arylène) en poudre est une poudre qui passe au travers d'un tamis de 0,707 à 0,074 mm (24 à 200 mesh).

3. Procédé selon la revendication 1, dans lequel la polycondensation est réalisée en présence d'un séparateur de phases.

4. Procédé selon la revendication 3, dans lequel le séparateur de phases est de l'eau, un halogénure de lithium ou un acétate de métal alcalin.

5. Procédé selon la revendication 4, dans lequel le séparateur de phases est différent de l'eau et est utilisé à raison de 0,05 mole à 2,0 moles par rapport aux moles d'atomes de soufre dans la source de soufre.

6. Procédé selon la revendication 3, dans lequel le séparateur de phases est ajouté au système réactionnel avant la polycondensation.

7. Procédé selon l'une quelconque des revendications 1 à 6, dans lequel le poly(sulfure d'arylène) en poudre est obtenu par post-traitement du produit réactionnel de ladite polycondensation.
